# EUROPEAN PATENT SPECIFICATION

(11) **EP 2 979 792 B1**
(45) Date of publication and mention of the grant of the patent: **03.11.2021**
(21) Application number: 14382291.4
(22) Date of filing: 29.07.2014
(51) Int. Cl.: B23B 47/28, B21J 15/50, B21J 15/00

(54) **Tooling adapted to manufacture a washer, method for manufacturing a conical washer, and use of a rivet for manufacturing a washer**
Fertigungsmittel zur Herstellung einer Unterlegscheibe, Verfahren zur Herstellung einer kegeligen Unterlegscheibe, und Verwendung einer Niete zur Herstellung einer Unterlegscheibe
Outillage pour la fabrication d'une rondelle, procédé pour la fabrication d'une rondelle conique, et utilisation d'un rivet pour la fabrication d'une rondelle

(43) Date of publication of application: 03.02.2016
(73) Proprietor: Airbus Operations S.L., 28906 Getafe (ES)
(72) Inventor: Kuechemann Avalos, Jorge Juan, E-28906 Getafe-Madrid (ES)
(74) Representative: ABG Intellectual Property Law, S.L.

(56) References cited:
- FR-A- 916 987
- US-A- 2 898 785
- US-A- 5 758 996

## Description

### FIELD OF THE INVENTION

The present invention relates to the field of manufacturing washers. Particularly, there is described a solution for a tooling for the manufacture of washers, a method for the manufacturing of a washer, and the use of a rivet for manufacturing a washer.

### BACKGROUND

In the field of manufacturing of washers there are known several methods. Depending on the type of washers to be obtained, in the case of plain washers a metallic plate may be used for being perforated with an appropriate die which allows making appropriate holes into the metallic plate for obtaining respective washers. A possible drawback which is present in this kind of manufacturing methods is that an appropriate metallic plate may not be accessible at any time in a small workshop.

Other methods for manufacturing washers, such as the one described in the patent document US3902209A, comprising the use of a strip of coil stock material which is cut from a stock and wound on a shaft; however this method is suitable only for fabricating washer of a predetermined diameter and not for obtaining small washers for being used for joining parts of an aircraft, for example.

Besides, depending on the shape of the washer to obtain, there are methods which employ specific tooling; for example, in the patent document KR101090599B a spring-washer making die is described comprising an upper die and a lower die. The upper die comprises a first punch part for punching a first punch hole in a specimen, a second punch part for forming front and rear peripheral parts of a spring washer around the first punch hole, a first pressing part for pressing the specimen so that the first punch hole surface is raised to form an upper part of the spring washer, a second pressing part for pressing down the raised upper part of the spring washer, and a third punch part for cutting the connection part between the specimen and the spring washer in order to cut out the spring washer from the specimen. The problem with this particular tooling is that it is difficult to employ it for the manufacture of different types of washers.

Document US 2 898 785 A discloses a tooling according to the preamble of claim 1.

A problem encountered with the existing tooling for manufacturing washers is that they are very specific and do not allow the local manufacture in a small mechanical workshop, such as the ones in the surroundings of a hangar.

There is a need, therefore, to have a tooling for the manufacture of washers which is easy to maintain and handle and also which allows obtaining washers from an accessible raw material.

### SUMMARY OF THE INVENTION

The present invention provides a solution for the aforementioned problems by a tooling adapted to manufacture a washer according to claim 1, a method for manufacturing a washer according to claim 7 and a use according to claim 12. The dependent claims define preferred embodiments of the invention.

In particular in a first aspect of the invention there is defined a tooling adapted to manufacture a washer comprising
- a lower part comprising a housing on a first surface, extended along an axis, said housing adapted to house a rivet shaft,
- an upper part comprising a supporting surface adapted to be positioned and fixed with the first surface of the lower part, said upper part comprising
   - a seat on the supporting surface of the upper part adapted to press a rivet head,
   - a passageway, extended along the axis, passing through the upper part providing an open access to the seat of the supporting surface configured as
   - guiding means for a perforating tool,
wherein the lower part and the upper part are adapted for being positioned and fixed in such a way that the axis of the housing coincides with the axis of the passageway of the second base.

The housing in the tooling is adapted to house a rivet shaft, wherein a rivet shaft may be of any type tubular or solid, and which presents a cylindrical shape, presenting a longitudinal or rotational axis therein. The housing extends along said rotational axis and is configured such that said axis coincides with the longitudinal or rotational axis of a possible rivet shaft which may be inserted in the housing.

The passageway in the tooling is adapted to guide a perforating tool wherein a perforating tool presents a cylindrical shape, presenting its rotational axis therein. The passageway is therefore configured such that its rotational axis coincides with the rotational axis of a possible rivet shaft which may be inserted in the housing, when the upper and lower parts are positioned and fixed.

By lower and upper parts positioned and fixed, in the present description, it must be understood as the lower part in the correct location with respect to the upper part so that the previously-mentioned axes coincide in an unmovably position.

A seat can be understood as an area where at least part of rivet head may be put under pressure when the lower and upper parts are positioned and fixed.

The lower part is formed by two pieces, detachable rivet supporting piece and base such that the detachable rivet supporting piece comprises the housing adapted for receiving a rivet shaft and the base is adapted to receive the rivet supporting piece in a first space.

This presents the advantage of having a set of detachable rivet supporting pieces wherein the diameter and length of the housing is adapted to different types of rivets.

In a particular embodiment of a tooling according to the first aspect of the invention the upper part is formed by two pieces, drilling machine guiding piece and cover such that a detachable drilling machine guiding piece comprises the passageway and the cover is adapted to receive the drilling machine guiding piece in a second space.

This embodiment presents the advantage of having a set of detachable drilling machine guiding pieces wherein the diameter of the passageway is adapted to different types of rivets. In this case, the perforating tool may also be adapted to perforate according to a predetermined rivet shaft diameter.

In a particular embodiment of a tooling according to the first aspect of the invention the seat is located in an open cavity.

A seat in the upper part may be the surface on which a rivet head may be positioned and, according to this embodiment, may also be in an open cavity or groove or edge, in such a way that at least a part of a rivet head is pressed.

In a particular embodiment of a tooling according to the first aspect of the invention the tooling further comprises a notch at an edge between a surface of the lower part and the space for facilitating the extraction of the rivet supporting piece from the lower part.

In a particular embodiment of a tooling according to the first aspect of the invention where the lower part is formed by two pieces, the notch is slot-shaped, or channel-shaped such that the access for picking or extracting the rivet supporting piece from the space is open to insert the fingers or tongs or tweezers and interchange the rivet supporting piece with a different one or simply to ease the use of the tooling.

In a particular embodiment of a tooling according to the first aspect of the invention the passageway may be reinforced with a layer of high hardness material, such as tungsten carbide.

In a second aspect of the invention there is defined a method for manufacturing a conical washer according to claim 7.

One of the main advantages of a method according to the invention is to provide an alternative and accessible procedure for obtaining washers. The raw material with which a washer may be obtained is a rivet, which is present in the most of workshops.

Besides, the method can be applied by providing any type of rivet, with any type of shaft or head, obtaining thereof different geometries for a washer. The standardization is present in every joining means or removable joining means commonly used in a workshop such that compatibility is ensured if a washer is manufactured with a rivet.

In a particular embodiment of a method according to the second aspect of the invention, the step of perforating is performed by means of a drilling machine. Again, this type of tool is present in the most of workshops and, according to this invention, it may be used for manufacturing washers rapidly and, what is more, reducing costs with respect to having a specific tooling for the manufacture of washers and with respect to having non-easy-to-access raw material. Having a tooling according to the invention allows, therefore, applying a manufacturing method using accessible tooling which may be present in the most of workshops and which does not require access to specific and big sized machinery.

In a particular embodiment of a method according to the second aspect of the invention, where it is applied using tooling comprising a lower part with rivet supporting piece and base, a further step is performed before housing the rivet shaft through the housing, this further step being selecting a detachable rivet supporting piece suitable for the diameter of the rivet shaft. This is advantageous since, depending on the type of rivet the manufacturer may be using, it is possible to have versatility with a tooling according to the invention and implementing a method according to the invention.

In a particular embodiment of a method according to the second aspect of the invention, where it is applied using tooling comprising an upper part with a drilling machine guiding piece and cover, a further step is performed before positioning and fixing the upper part and the lower part, this further step being selecting a detachable drilling machine guiding piece suitable for the diameter of a perforating tool and a rivet shaft. Once more, the versatility obtained with a tooling comprising detachable and interchangeable pieces is optimum, since there may be the necessity of manufacturing washers for different shapes, geometries and sizes. The tooling according to the first aspect allows implementing a method according to the invention in which a selection of the size of the hole performed on the rivet head, which results in a different diameter of an inner hole of the resulting washer.

There are three features derived from the technical features of the invention:
- the relation between the diameters of the perforating tool according to the passageway,
- the relation between the diameters of the rivet shaft and the housing, and
- the positioning and fixing of the lower and upper parts.

These three features provide advantages such as the lack of clearance between the housing and rivet shaft and between the passageway and the perforating tool which allows the perforation to be
- perpendicular to a plane defined by the union of lower and upper parts and
- coaxial with the housing and therefore with the rivet shaft

Therefore, the perforation results in the separation of a rivet head from the rivet shat allowing the perforation to obtain a washer.

In a third aspect of the invention there is defined a use of a rivet for manufacturing a washer according to claim 12.

A use according to this aspect of the invention allows using a rivet for manufacturing washers rapidly and, what is more, reducing costs with respect to having non-easy-to-access raw material which does not require access to specific and big sized machinery.

In a particular embodiment of a use of a rivet for manufacturing a washer the manufacturing is performed using a tooling according to the first aspect of the invention and implementing a method according to the second aspect of the invention.

### DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.
- Figure 1: This figure represents an example of a tooling not according to the invention. In the example there are represented a lower part (1), an upper part (3), a housing (2) a seat (4) and a passageway (6) adapted to act as a guide between a supporting surface (5) and a further surface (7).
- Figure 2: This figure represents an embodiment of a tooling according to the invention. The figure shows the lower and upper part (1, 3) comprising a rivet supporting piece (8), base (9), drilling machine guiding piece (15) and cover (16).
- Figure 3A: This figure represents an embodiment of a tooling according to the invention.
- Figure 3B: This figure represents an embodiment of a tooling according to the invention.
- Figure 3C: This figure represents an embodiment of a tooling according to the invention.
- Figure 4: This figure represents an embodiment of a tooling according to the invention. The figure shows a perforating tool, in particular a drilling machine.

### DETAILED DESCRIPTION OF THE INVENTION

Once the object of the invention has been outlined, specific non-limitative embodiments are described hereinafter. The term rivet may be referred to any type of rivet, for example solid or round head rivets, high-strength structural steel rivets, semi-tubular rivets, blind rivets, oscar rivets, drive rivet, flush rivet, friction-lock rivet and the like, as long as they fulfil the requirement of comprising a shaft and a head.

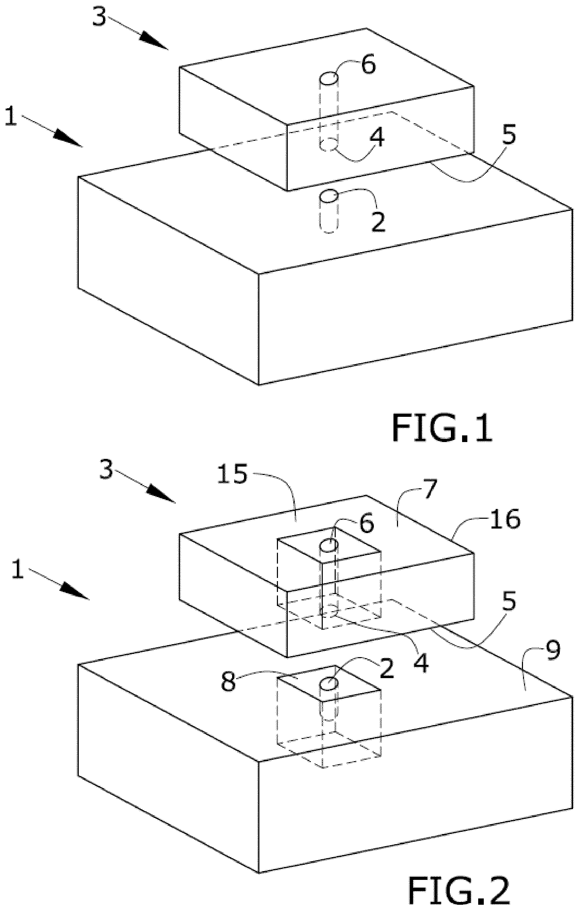

In figure 1 there is shown an example of a tooling. In the example there are represented a lower part (1), a upper part (3), a housing (2) a seat (4) and a passageway (6) acting as a guide and the passageway (6) is adapted for acting as a guide for a perforating tool, such as a drill bit, in a trajectory from the supporting surface (5) and a further surface (7).

The embodiment in figure 2 further comprises the lower part (1) and upper part (3) comprising rivet supporting piece (8), base (9), drilling machine guiding piece (15) and cover (16). The seat is arranged on the supporting surface (5) and the passageway (6) is adapted for acting as a guide for a perforating tool, such as a drill bit. As an advantage it allows having interchangeable first and drilling machine guiding pieces for major versatility and adaptability to different types of rivets being used.

### Tooling for manufacturing conical washers

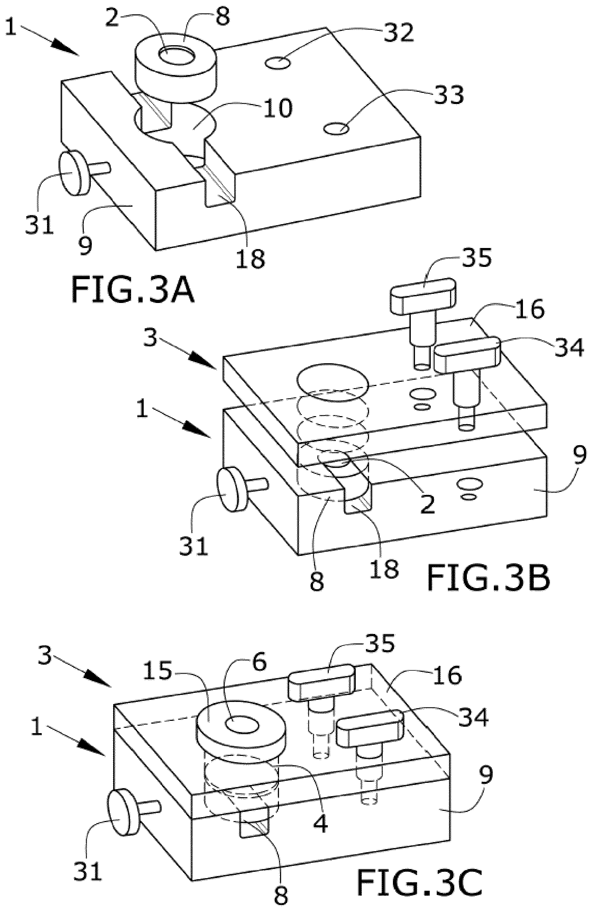

As a non-limitative example, in figures 3A, 3B and 3C there is represented a tooling for manufacturing conical washers.

In particular, conical washers are advantageous for its use in aircraft structures when there is a need for softening vibrations in and in repetitive non conformities (undue countersunk) on the skin of some parts of the aircraft structure. Conical washers present the drawback that its manufacturing time is long in the state of the art. In an example, the manufacturing time to make a conical washer using a tooling according to the invention is 0,5 hours, and it may be performed in-house.

The tooling in figures 3A, 3B and 3C comprise a lower part (1) comprising
- a rivet supporting piece (8) comprising a housing (2) adapted for receiving a rivet shaft,
- a space (10) adapted to receive the rivet supporting piece (8),
- a channel-shaped notch (18),
- a fixing pin (31),
- housings (32, 33) for respective fixing pins (34, 35).

The tooling also presents, shown in figure 3B, an upper part (3) comprising a cover (16) on the way to be positioned and fixed with fixing pins (34, 35) on the lower part (1).

In figure 3C, the tooling is shown with lower part (1) and upper part (3) positioned and fixed. On the further surface (7) there can be seen the drilling machine guiding piece (15) which overflows on the cover (16) in this particular case. Said protruding part in the drilling machine guiding piece (15) presents the advantage of presenting the borders from which it can be picked up for easy handling. The fixing pin (31) may be a screwing bolt which may allow positioning of the rivet supporting piece (8) in the tooling.

A manufacturing method making use of the tooling shown in figures 3A, 3B and 3C may follow the steps:
- inserting a rivet supporting piece (8) in the space (10) of the lower part (1) part of the tool, specific for the rivet to be used, and fix it with the adjusting screwing bolt (31),
- inserting the rivet inside the housing (2),
- positioning and fix the upper part (3) making use of two fixing pins (34, 35),
- inserting the drilling machine guiding piece (15) in the cover (16) for a drilling machine to be inserted and
- drilling the rivet with a diameter exactly the same as the threaded part in order to have a washer from the head of the rivet

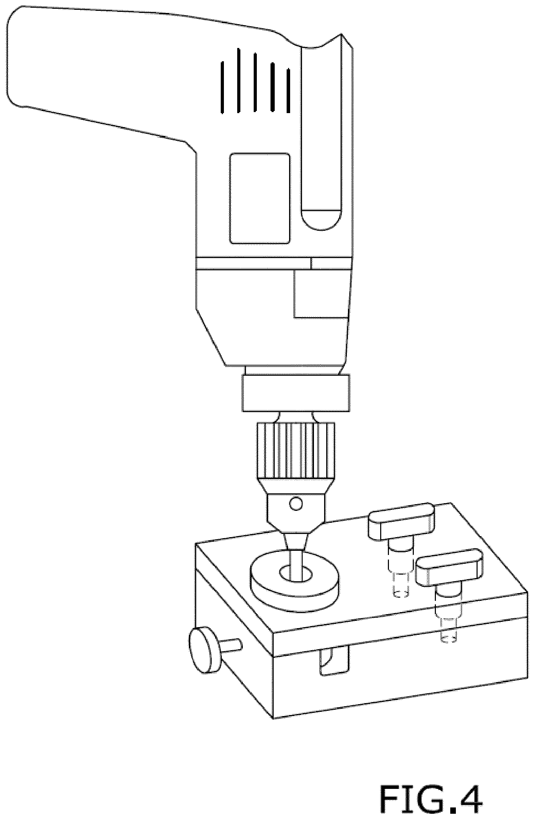

Figure 4 represents an embodiment of a tooling according to the invention. The figure 4 shows a perforating tool, in particular a drilling machine. As it can be unambiguously derived from figure 4, the tooling according to the invention presents the advantage of being easily handled. As an advantage from the configuration of the tooling of the invention, the drilling bit is inserted coaxially to the rivet shat inside the tooling and perpendicular to the plane of the union between lower and upper parts (1, 3).

## Claims

1. Tooling adapted to manufacture a washer comprising
- a lower part (1) comprising a housing (2) on a first surface, extended along an axis, said housing (2) adapted to house a rivet shaft,
- an upper part (3) comprising a supporting surface adapted to be positioned and fixed with the first surface of the lower part, said upper part (3) comprising
- a seat (4) on the supporting surface of the upper part (3) adapted to press a rivet head,
- a passageway (6), extended along an axis, passing through the upper part (3) providing an open access to the seat (4) of the supporting surface configured as
- guiding means for a perforating tool,
wherein the lower part (1) and the upper part (3) are adapted for being positioned and fixed in such a way that the axis of the housing (2) coincides with the axis of the passageway (6) of the upper part (3),and **characterised in that** the lower part is formed by two pieces, detachable rivet supporting piece (8) and base (9) such that the detachable rivet supporting piece (8) comprises the housing (2) adapted for receiving a rivet shaft and the base (9) is adapted to receive the rivet supporting piece (8) in a first space (10).

2. Tooling according to claim 1 wherein the upper part (3) is formed by two pieces, drilling machine guiding piece (15) and cover (16) such that a detachable drilling machine guiding piece (15) comprises the passageway (6) and the cover (16) is adapted to receive the drilling machine guiding piece (15) in a second space (17).

3. Tooling according to any of the preceding claims wherein the seat (4) is located in an open cavity.

4. Tooling according to any of claims 1 to 3 further comprising a notch (18) at an edge between the first surface of the lower part (1) and the space (10) for facilitating the extraction of the rivet supporting piece (8) from the lower part (1).

5. Tooling according to claim 4 wherein the notch (18) is slot-shaped.

6. Tooling according to any of the preceding claims **characterized in that** the passageway (6) is reinforced with a layer of high hardness material, such as tungsten carbide.

7. Method for manufacturing a conical washer comprising
- providing a rivet (11), the rivet comprising a rivet shaft (12) and a rivet head (13),
- providing a tooling adapted to manufacture a washer, the tooling comprising
- a lower part (1) comprising a housing (2) on a first surface, extended along an axis, said housing (2) adapted to house a rivet shaft,
- an upper part (3) comprising a supporting surface adapted to be positioned and fixed with the first surface of the lower part, said upper part (3) comprising
▪ a seat (4) on the supporting surface of the upper part (3) adapted to press a rivet head,
▪ a passageway (6), extended along an axis, passing through the upper part (3) providing an open access to the seat (4) of the supporting surface configured as
▪ guiding means for a perforating tool,
wherein the lower part (1) and the upper part (3) are adapted for being positioned and fixed in such a way that the axis of the housing (2) coincides with the axis of the passageway (6) of the upper part (3),
- housing the rivet shaft in the housing (2),
- positioning and fixing the upper part (3) and the lower part (1), in a manner such that the assembly formed by the lower part and the upper part is adapted to
- introducing a perforating tool through the passageway perforating the rivet head substantially in its centre obtaining a perforated hole wherein said perforated hole is sized with a diameter equal or greater that the diameter of the rivet shaft; and the perforation length is such that the rivet shaft is separated from the rivet head, obtaining a washer thereof,
- extracting the washer from the tooling.

8. Method according to claim 7 wherein the step of perforating is performed by means of a drilling machine.

9. Method according to any of claims 7 or 8 wherein the tooling comprises a lower part (1) comprising rivet supporting piece (8) and base (9) according to claim 1 and a further step is performed before housing the rivet shaft through the housing (2), this further step being selecting a detachable rivet supporting piece (8) suitable for the diameter of the rivet shaft.

10. Method according to any of claims 7 to 9 wherein the tooling comprises an upper part (3) comprising a drilling machine guiding piece (15) and cover (16) according to claim 2 and a further step is performed before positioning and fixing the upper part (3) and the lower part (1), this further step being selecting a detachable drilling machine guiding piece (15) suitable for the diameter of a perforating tool and a rivet shaft.

11. Method according to any of claims 7 to 10 wherein the tooling is according to any of claims 1 to 6.

12. Use of a rivet for manufacturing a washer by the use of a tooling adapted to manufacture a washer, the tooling comprising
- a lower part (1) comprising a housing (2) on a first surface, extended along an axis, said housing (2) adapted to house a rivet shaft,
- an upper part (3) comprising a supporting surface adapted to be positioned and fixed with the first surface of the lower part, said upper part (3) comprising
- a seat (4) on the supporting surface of the upper part (3) adapted to press a rivet head,
- a passageway (6), extended along an axis, passing through the upper part (3) providing an open access to the seat (4) of the supporting surface configured as
- guiding means for a perforating tool,
wherein the lower part (1) and the upper part (3) are adapted for being positioned and fixed in such a way that the axis of the housing (2) coincides with the axis of the passageway (6) of the upper part (3).

13. Use of a rivet and a tooling for manufacturing a washer by a method according to any of claims 7 to 10, wherein the tooling is adapted to manufacture a washer and comprises:
- a lower part (1) comprising a housing (2) on a first surface, extended along an axis, said housing (2) adapted to house a rivet shaft,
- an upper part (3) comprising a supporting surface adapted to be positioned and fixed with the first surface of the lower part, said upper part (3) comprising
- a seat (4) on the supporting surface of the upper part (3) adapted to press a rivet head,
- a passageway (6), extended along an axis, passing through the upper part (3) providing an open access to the seat (4) of the supporting surface configured as
- guiding means for a perforating tool,
wherein the lower part (1) and the upper part (3) are adapted for being positioned and fixed in such a way that the axis of the housing (2) coincides with the axis of the passageway (6) of the upper part (3).

14. Use according to any of claims 12 or 13, wherein the tooling is according to any of claims 1 to 6.

## Patentansprüche

1. Fertigungsmittel zur Herstellung einer Unterlegscheibe, umfassend:
- einen unteren Teil (1), der ein Gehäuse (2) auf einer ersten Fläche aufweist, das sich entlang einer Achse erstreckt, wobei das Gehäuse (2) dazu angepasst ist, einen Nietschaft aufzunehmen,
- einen oberen Teil (3), der eine Stützfläche aufweist, die dazu angepasst ist, mit der ersten Fläche des unteren Teils positioniert und befestigt zu werden, wobei der obere Teil (3) umfasst:
- einen Sitz (4) auf der Auflagefläche des oberen Teils (3), der zum Drücken eines Nietkopfes angepasst ist,
- einen Durchlass (6), der sich entlang einer Achse erstreckt und durch den oberen Teil (3) hindurchgeht und einen offenen Zugang zum Sitz (4) der Auflagefläche bietet, die ausgelegt ist als
- Führungsmittel für ein Perforierwerkzeug, wobei der untere Teil (1) und der obere Teil (3) so positioniert und befestigt werden können, dass die Achse des Gehäuses (2) mit der Achse des Durchlasses (6) des oberen Teils (3) übereinstimmt, und
**dadurch gekennzeichnet, dass**
der untere Teil aus zwei Stücken, einem abnehmbaren Niethaltestück (8) und einer Basis (9), gebildet ist, sodass das abnehmbare Niethaltestück (8) das Gehäuse (2) umfasst, das zum Aufnehmen eines Nietschafts angepasst ist, und die Basis (9) dazu angepasst ist, das Niethaltestück (8) in einem ersten Zwischenraum (10) aufzunehmen.

2. Fertigungsmittel gemäß Anspruch 1, wobei der obere Teil (3) aus zwei Stücken, einem Bohrmaschinenführungsstück (15) und einer Abdeckung (16), gebildet ist, sodass ein abnehmbares Bohrmaschinenführungsstück (15) den Durchlass (6) umfasst und die Abdeckung (16) dazu angepasst ist, das Bohrmaschinenführungsstück (15) in einem zweiten Zwischenraum (17) aufzunehmen.

3. Fertigungsmittel gemäß einem der vorhergehenden Ansprüche, wobei sich der Sitz (4) in einem offenen Hohlraum befindet.

4. Fertigungsmittel gemäß einem der Ansprüche 1 bis 3, ferner umfassend eine Kerbe (18) an einer Kante zwischen der ersten Oberfläche des unteren Teils (1) und dem Zwischenraum (10) zum leichteren Herausziehen des Niethaltestücks (8) aus dem unteren Teil (1).

5. Fertigungsmittel gemäß Anspruch 4, wobei die Kerbe (18) schlitzförmig ist.

6. Fertigungsmittel gemäß einem der vorhergehenden Ansprüche, **dadurch gekennzeichnet, dass** der Durchlass (6) mit einer Schicht aus einem hochharten Material, wie z. B. Wolframkarbid, verstärkt ist.

7. Verfahren zum Herstellen einer kegeligen Unterlegscheibe, umfassend
- Bereitstellen eines Niets (11), wobei der Niet einen Nietschaft (12) und einen Nietkopf (13) aufweist,
- Bereitstellen eines Fertigungsmittels zum Herstellen einer Unterlegscheibe, wobei das Fertigungsmittel umfasst:
- einen unteren Teil (1), der ein Gehäuse (2) auf einer ersten Fläche aufweist, das sich entlang einer Achse erstreckt, wobei das Gehäuse (2) dazu angepasst ist, einen Nietschaft aufzunehmen,
- einen oberen Teil (3), der eine Stützfläche aufweist, die dazu angepasst ist, mit der ersten Fläche des unteren Teils positioniert und befestigt zu werden, wobei der obere Teil (3) umfasst:
• einen Sitz (4) auf der Auflagefläche des oberen Teils (3), der zum Drücken eines Nietkopfes angepasst ist,
• einen Durchlass (6), der sich entlang einer Achse erstreckt und durch den oberen Teil (3) hindurchgeht und einen offenen Zugang zum Sitz (4) der Auflagefläche bietet, die ausgelegt ist als
• Führungsmittel für ein Perforierwerkzeug,
wobei der untere Teil (1) und der obere Teil (3) so positioniert und befestigt werden können, dass die Achse des Gehäuses (2) mit der Achse des Durchlasses (6) des oberen Teils (3) übereinstimmt,
- Aufnehmen des Nietschafts in dem Gehäuse (2),
- Positionieren und Befestigen des oberen Teils (3) und des unteren Teils (1) so, dass die durch den unteren Teil und den oberen Teil gebildete Anordnung angepasst ist zum:
- Einführen eines Perforationswerkzeugs durch den Durchlass, das den Nietkopf im Wesentlichen in seiner Mitte perforiert, wodurch ein perforiertes Loch erhalten wird, wobei das perforierte Loch mit einem Durchmesser gleich oder größer als der Durchmesser des Nietschafts bemessen ist; und die Perforationslänge so ist, dass der Nietschaft vom Nietkopf getrennt wird, wodurch eine Unterlegscheibe davon erhalten wird,
- Herausziehen der Unterlegscheibe aus dem Fertigungsmittel.

8. Verfahren gemäß Anspruch 7, wobei der Schritt des Perforierens mittels einer Bohrmaschine durchgeführt wird.

9. Verfahren gemäß einem der Ansprüche 7 oder 8, wobei das Fertigungsmittel einen unteren Teil (1) umfasst, der ein Niethaltestück (8) und eine Basis (9) gemäß Anspruch 1 umfasst, und ein weiterer Schritt vor dem Aufnehmen des Nietschafts durch das Gehäuse (2) durchgeführt wird, wobei dieser weitere Schritt das Auswählen eines abnehmbaren Niethaltestücks (8) ist, das für den Durchmesser des Nietschafts geeignet ist.

10. Verfahren gemäß einem der Ansprüche 7 bis 9, wobei das Fertigungsmittel einen oberen Teil (3) umfasst, der ein Bohrmaschinenführungsstück (15) und eine Abdeckung (16) gemäß Anspruch 2 umfasst, und ein weiterer Schritt vor dem Positionieren und Befestigen des oberen Teils (3) und des unteren Teils (1) durchgeführt wird, wobei dieser weitere Schritt das Auswählen eines abnehmbaren Bohrmaschinenführungsstücks (15) ist, das für den Durchmesser eines Perforationswerkzeugs und eines Nietschafts geeignet ist.

11. Verfahren gemäß einem der Ansprüche 7 bis 10, wobei das Fertigungsmittel gemäß einem der Ansprüche 1 bis 6 ausgeführt ist.

12. Verwendung eines Niets zum Herstellen einer Unterlegscheibe unter Verwendung eines Fertigungsmittels, das zum Herstellen einer Unterlegscheibe angepasst ist, wobei das Werkzeug umfasst:
- einen unteren Teil (1), der ein Gehäuse (2) auf einer ersten Fläche aufweist, das sich entlang einer Achse erstreckt, wobei das Gehäuse (2) dazu angepasst ist, einen Nietschaft aufzunehmen,
- einen oberen Teil (3), der eine Stützfläche aufweist, die dazu angepasst ist, mit der ersten Fläche des unteren Teils positioniert und befestigt zu werden, wobei der obere Teil (3) umfasst:
- einen Sitz (4) auf der Auflagefläche des oberen Teils (3), der zum Drücken eines Nietkopfes angepasst ist,
- einen Durchlass (6), der sich entlang einer Achse erstreckt und durch den oberen Teil (3) hindurchgeht und einen offenen Zugang zum Sitz (4) der Auflagefläche bietet, die ausgelegt ist als
- Führungsmittel für ein Perforierwerkzeug, wobei der untere Teil (1) und der obere Teil (3) so positioniert und befestigt werden können, dass die Achse des Gehäuses (2) mit der Achse des Durchlasses (6) des oberen Teils (3) übereinstimmt.

13. Verwendung eines Niets und eines Fertigungsmittels zum Herstellen einer Unterlegscheibe durch ein Verfahren gemäß einem der Ansprüche 7 bis 10, wobei das Fertigungsmittel zum Herstellen einer Unterlegscheibe angepasst ist und umfasst:
- einen unteren Teil (1), der ein Gehäuse (2) auf einer ersten Fläche aufweist, das sich entlang einer Achse erstreckt, wobei das Gehäuse (2) dazu angepasst ist, einen Nietschaft aufzunehmen,
- einen oberen Teil (3), der eine Stützfläche aufweist, die dazu angepasst ist, mit der ersten Fläche des unteren Teils positioniert und befestigt zu werden, wobei der obere Teil (3) umfasst:
- einen Sitz (4) auf der Auflagefläche des oberen Teils (3), der zum Drücken eines Nietkopfes angepasst ist,
- einen Durchlass (6), der sich entlang einer Achse erstreckt und durch den oberen Teil (3) hindurchgeht und einen offenen Zugang zum Sitz (4) der Auflagefläche bietet, die ausgelegt ist als
- Führungsmittel für ein Perforierwerkzeug, wobei der untere Teil (1) und der obere Teil (3) so positioniert und befestigt werden können, dass die Achse des Gehäuses (2) mit der Achse des Durchlasses (6) des oberen Teils (3) übereinstimmt.

14. Verwendung gemäß einem der Ansprüche 12 bis 13, wobei das Fertigungsmittel gemäß einem der Ansprüche 1 bis 6 ausgeführt ist.

## Revendications

1. Outillage pour la fabrication d'une rondelle comprenant
- une partie inférieure (1) comprenant un logement (2) sur une première surface, étendue le long d'un axe, ledit logement (2) étant conçu pour loger un arbre de rivet,
- une partie supérieure (3) comprenant une surface de support conçue pour être positionnée et fixée avec la première surface de la partie inférieure, ladite partie supérieure (3) comprenant
- un siège (4) sur la surface de support de la partie supérieure (3) conçu pour presser une tête de rivet,
- un passage (6), étendu le long d'un axe, passant à travers la partie supérieure (3) fournissant un accès ouvert au siège (4) de la surface de support conçu comme
- un moyen de guidage pour un outil de perforation,
la partie inférieure (1) et la partie supérieure (3) étant conçues pour être positionnées et fixées de sorte que l'axe du boîtier (2) coïncide avec l'axe du passage (6) de la partie supérieure (3), et
**caractérisé en ce que**
la partie inférieure est formée de deux pièces, une pièce de support de rivet (8) amovible et une base (9) de sorte que la pièce de support de rivet (8) amovible comprenne le logement (2) conçu pour recevoir une tige de rivet et que la base (9) soit conçue pour recevoir la pièce de support de rivet (8) dans un premier espace (10).

2. Outillage selon la revendication 1, la partie supérieure (3) étant formée de deux pièces, une pièce de guidage (15) de machine à percer et un couvercle (16) de sorte qu'une pièce de guidage (15) de machine à percer amovible comprenne le passage (6) et que le couvercle (16) soit conçu pour recevoir la pièce de guidage (15) de machine à percer dans un second espace (17).

3. Outillage selon l'une quelconque des revendications précédentes, le siège (4) étant situé dans une cavité ouverte.

4. Outillage selon l'une quelconque des revendications 1 à 3 comprenant en outre une encoche (18) au niveau d'un bord entre la première surface de la partie inférieure (1) et l'espace (10) pour faciliter l'extraction de la pièce de support de rivet (8) de la partie inférieure (1).

5. Outillage selon la revendication 4, l'encoche (18) étant en forme de fente.

6. Outillage selon l'une quelconque des revendications précédentes, **caractérisé en ce que** le passage (6) est renforcé par une couche de matériau de haute dureté, tel que le carbure de tungstène.

7. Procédé de fabrication d'une rondelle conique comprenant les étapes consistant à
- fournir un rivet (11), le rivet comprenant une tige de rivet (12) et une tête de rivet (13),
- fournir un outillage pour la fabrication d'une rondelle, l'outillage comprenant
- une partie inférieure (1) comprenant un logement (2) sur une première surface, étendue le long d'un axe, ledit logement (2) étant conçu pour loger un arbre de rivet,
- une partie supérieure (3) comprenant une surface de support conçue pour être positionnée et fixée avec la première surface de la partie inférieure, ladite partie supérieure (3) comprenant
• un siège (4) sur la surface de support de la partie supérieure (3) conçu pour presser une tête de rivet,
• un passage (6), étendu le long d'un axe, passant à travers la partie supérieure (3) fournissant un accès ouvert au siège (4) de la surface de support conçu comme
• un moyen de guidage pour un outil de perforation,
la partie inférieure (1) et la partie supérieure (3) étant conçues pour être positionnées et fixées de sorte que l'axe du boîtier (2) coïncide avec l'axe du passage (6) de la partie supérieure (3),
- loger l'arbre de rivet dans le logement (2),
- positionner et fixer la partie supérieure (3) et la partie inférieure (1), de sorte que l'ensemble formé par la partie inférieure et la partie supérieure soit conçu pour
- introduire un outil de perforation à travers le passage en perforant la tête de rivet sensiblement en son centre pour obtenir un trou perforé, ledit trou perforé étant dimensionné avec un diamètre égal ou supérieur au diamètre de la tige de rivet ; et la longueur de perforation est telle que la tige de rivet est séparée de la tête de rivet, obtenant ainsi une rondelle de celle-ci,
- extraire la rondelle de l'outillage.

8. Procédé selon la revendication 7, la perforation étant réalisée au moyen d'une machine à percer.

9. Procédé selon l'une quelconque des revendications 7 ou 8, l'outillage comprenant une partie inférieure (1) comprenant une pièce de support de rivet (8) et une base (9) selon la revendication 1 et une étape supplémentaire étant réalisée avant de loger la tige de rivet à travers le logement (2), cette étape supplémentaire consistant à sélectionner une pièce de support de rivet (8) amovible correspondant au diamètre de la tige de rivet.

10. Procédé selon l'une quelconque des revendications 7 à 9, l'outillage comprenant une partie supérieure (3) comprenant une pièce de guidage (15) de machine à percer et un couvercle (16) selon la revendication 2 et une étape supplémentaire étant réalisée avant de positionner et de fixer la partie supérieure (3) et la partie inférieure (1), cette étape supplémentaire consistant à sélectionner une pièce de guidage (15) de machine à percer amovible correspondant au diamètre d'un outil de perforation et d'une tige de rivet.

11. Procédé selon l'une quelconque des revendications 7 à 10, l'outillage étant selon l'une quelconque des revendications 1 à 6.

12. Utilisation d'un rivet pour fabriquer une rondelle par l'utilisation d'un outillage pour la fabrication d'une rondelle, l'outillage comprenant
- une partie inférieure (1) comprenant un logement (2) sur une première surface, étendue le long d'un axe, ledit logement (2) étant conçu pour loger un arbre de rivet,
- une partie supérieure (3) comprenant une surface de support conçue pour être positionnée et fixée avec la première surface de la partie inférieure, ladite partie supérieure (3) comprenant
- un siège (4) sur la surface de support de la partie supérieure (3) conçu pour presser une tête de rivet,
- un passage (6), étendu le long d'un axe, passant à travers la partie supérieure (3) fournissant un accès ouvert au siège (4) de la surface de support conçu comme
- un moyen de guidage pour un outil de perforation,
la partie inférieure (1) et la partie supérieure (3) étant conçues pour être positionnées et fixées de sorte que l'axe du boîtier (2) coïncide avec l'axe du passage (6) de la partie supérieure (3).

13. Utilisation d'un rivet et d'un outillage pour la fabrication d'une rondelle par un procédé selon l'une quelconque des revendications 7 à 10, l'outillage étant conçu pour la fabrication d'une rondelle et comprenant :
- une partie inférieure (1) comprenant un logement (2) sur une première surface, étendue le long d'un axe, ledit logement (2) étant conçu pour loger un arbre de rivet,
- une partie supérieure (3) comprenant une surface de support conçue pour être positionnée et fixée avec la première surface de la partie inférieure, ladite partie supérieure (3) comprenant
- un siège (4) sur la surface de support de la partie supérieure (3) conçu pour presser une tête de rivet,
- un passage (6), étendu le long d'un axe, passant à travers la partie supérieure (3) fournissant un accès ouvert au siège (4) de la surface de support conçu comme
- un moyen de guidage pour un outil de perforation,
la partie inférieure (1) et la partie supérieure (3) étant conçues pour être positionnées et fixées de sorte que l'axe du boîtier (2) coïncide avec l'axe du passage (6) de la partie supérieure (3).

14. Utilisation selon l'une quelconque des revendications 12 ou 13, l'outillage étant selon l'une quelconque des revendications 1 à 6.
